# EUROPEAN PATENT APPLICATION

(11) **EP 1 043 080 A1**
(43) Date of publication of application: **11.10.2000**
(21) Application number: 99106374.4
(22) Date of filing: 29.03.1999
(51) Int. Cl.: B08B 3/02, B05B 15/06

(54) **Ejection nozzle and handle assembly for a domestic high-pressure cleaner**

(71) Applicant: Alto Danmark A/S, 9560 Hadsund (DK)
(72) Inventor: Sand, Alan, 9560 Hadsund (DK)
(74) Representative: Roerboel, Leif

(57) **Abstract**

The present invention relates to an ejection nozzle and handle assembly for a domestic high-pressure cleaner comprising an ejection nozzle (4) for ejecting high-pressure fluid integrated in a nozzle element (1), the nozzle element (1) being releasably connected to the handle by a coupling system, wherein the distance between the handle and the ejection nozzle is at least 750 mm due to the presence of the nozzle element and a shaft member (3) between the handle and the ejection nozzle (4). The present system allows for convenient exchange of different nozzles. Hereto, the system is provided with a quick coupling and automatic locking coupling system.

## Description

### TECHNICAL FIELD

The present invention relates to an ejection nozzle and handle assembly for a domestic high-pressure cleaner according to the preamble of claim 1. Such assemblies serve as a tool for applying high-pressure cleaning fluid to objects to be cleaned.

### BACKGROUND ART

An assembly of this kind is disclosed in KEW, "Dynamic" "The Quality Choice in Pressure Washers". In this disclosure is described an ejection nozzle and a handle assembly for a high-pressure cleaner. The assembly is built up by two parts, namely an elongated nozzle element housing the ejection nozzle connected via a bayonet coupling to a handle in the form of a gun. The cleaning fluid is supplied from the high-pressure cleaner which is the source of the fluid under pressure to the gun via a flexible hose. Recent developments in the field of domestic high-pressure cleaners, i.e. high-pressure cleaners with a maximum power consumption of 2 kW led to the use of many different types of ejection nozzles, such as nozzles with different cleaning angles, flat jet nozzles, water-blaster nozzles, foaming nozzles, rotary nozzles, etc. Consequently, there is now a need for an assembly system which allows quick and user-friendly exchange of the different types of nozzles. The existing system uses a bayonet coupling which is relatively large and cumbersome in operation, since it is the user himself who has to ensure that the nozzle is locked properly.

### DISCLOSURE OF THE INVENTION

On this background, it is the object of the present invention to provide an ejection nozzle and handle assembly for a domestic high-pressure cleaner of the kind referred to initially, which overcomes the above-mentioned problems. This object is achieved in accordance with claim 1 by the assembly comprising an automatic locking quick-coupling system. With this system, it is possible to connect a nozzle element to the lance member by simply pushing the nozzle element onto the lance, without any action of the user being required on the coupling part integral with the lance member. Further, the disconnection of the nozzle element from the lance can be achieved by a simple one-handed push operation.

According to an embodiment, the length of the nozzle element is less than 25%, preferably less than 10% of the total distance between the trigger on the handle and the ejection nozzle.

According to another embodiment of the invention, the shaft member comprises an integrated low-pressure ejection nozzle.

According another embodiment of the invention, the shaft is releasably connected to the handle by an automatic locking quick-coupling system.

According to yet another embodiment of the invention, the coupling system allows the nozzle to rotate relative to the shaft element which is particularly advantageous with the use of a flat spray nozzle.

According to a further embodiment of the invention, the coupling system comprises at least one resilient sealing member, preferably an O-ring which is secured to the part of the coupling system integral with the shaft element. This embodiment has the advantage that the O-ring sealing is located in an annular recess, so that it is protected from exterior influences. Further, the part of the coupling integral with the nozzle element can do without any resilient sealing means.

According to another embodiment of the invention, the retainer element of the coupling is received in a transverse recess, in which it can move under the influence of a resilient member urging the retainer element outwards.

### BRIEF DESCRIPTION OF THE DRAWINGS

In the following detailed part of the present description, the invention will be explained in more detail with reference to the exemplary embodiments shown in the drawings, in which
Figure 1 is a diagrammatic illustration of an ejection nozzle and handle assembly according to an embodiment of the invention,
Figure 2 is a cross-sectional illustration of the ejection nozzle and the shaft member in connection through the coupling system,
Figure 2b is a cross-sectional illustration of the nozzle element and the lance member being released from the connection through the coupling system,
Figure 2c is a cross-sectional illustration of the nozzle element and the lance member which are not in connection.

### DETAILED DESCRIPTION OF THE INVENTION

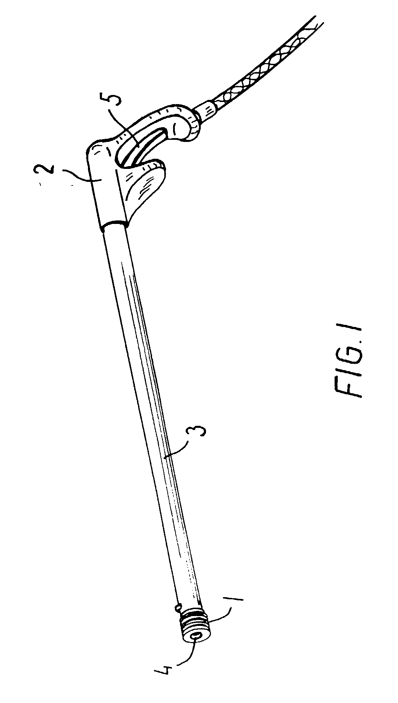

The assembly as shown in Figure 1 comprises a handle 2 with an integrated trigger 5. The handle is connected via a flexible hose to the high-pressure cleaner apparatus (not shown) which is the source of the cleaning liquid under pressure. The handle comprises a shaft member 3 at the end of which is connected a nozzle element 1. The nozzle element is releasably connected to the end of the shaft by a coupling system. The nozzle element comprises an ejection nozzle 4 for ejecting the high-pressure fluid. The nozzle element 1, the shaft member 3 and the handle 2 comprise an internal delivery conduit (not shown) for the delivery of high-pressure cleaning liquid. Due to legal safety requirements, the distance between the trigger 5 and the ejection nozzle 4 may not be less than 750 mm. According to the invention, the nozzle element 1 has a relatively short length, preferably less than 75 mm. Therefore, the shaft member 3 has to cover the rest of the remaining length between the trigger 5 and the ejection nozzle 4. The nozzle element 1, in Figure 1 represented as a simple block to which an ejection nozzle is attached, may have a variety of different shapes and functions, such as a rotary nozzle, a scrubbing tool, a foam injector, etc., as well-known in the art.

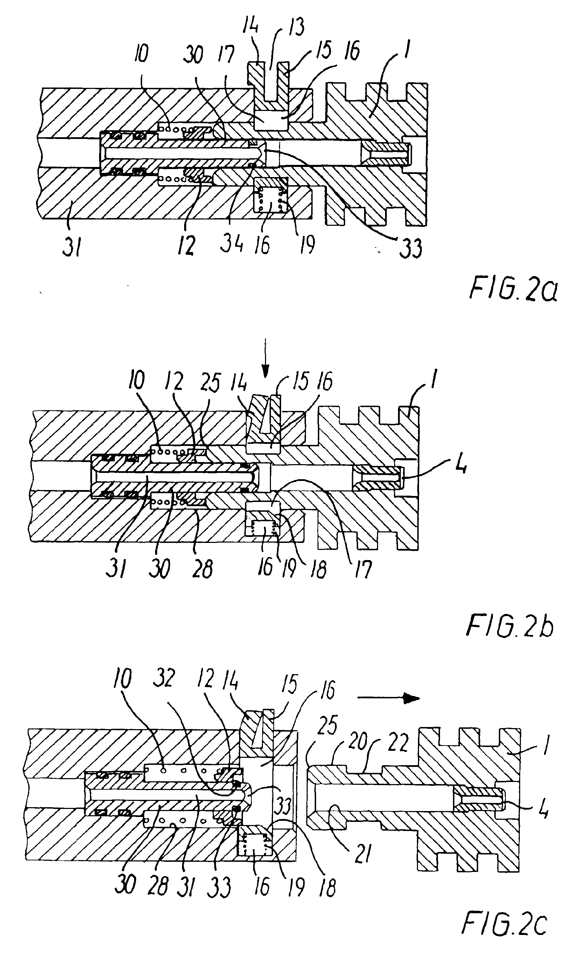

With reference to Figures 2a, 2b and 2c, the coupling system between the nozzle element 4 and the shaft member 3 is described. The nozzle comprises a main body and a stem 20 extending from the main body. The stem is provided with an axial bore 21 which also extends into the main body of the nozzle element. An ejection nozzle 4 is integrated in the main body and is in connection with the axial bore 21. The stem 20 is provided with a circumferential groove 22 on its outer surface.

The shaft member 3 defines an annular recess 28 for receiving the stem 20 of the nozzle element 1. The annular recess is therefore of substantially the same diameter as the stem 20. At the bottom of the annular recess 28, there is provided a second stem 30, defining an axial bore 31. The second stem 30 is placed concentrically in the annular recess 28. The diameter of the stem 30 is such that it fits in the bore 21 of the nozzle element. The stem 30 is provided with an annular recess near its proximal end for receiving an O-ring sealing. The O-ring sealing engages and seals with the inner surface of the bore 21. A helical spring is disposed over the stem 30. One end of the helical spring 10 is fastened to the bottom of the annular recess 28, whereas the other, i.e. free end, engages a ring 12 which is slidably disposed over the stem 30. The rear surface of the ring 12 engages the helical spring 10, whereas the front surface of the ring 12 is intended to engage the front surface of the stem 20 of the nozzle element 1. Upon insertion of the stem 20 into the recess 28, the helical spring is thus compressed.

The shaft member 3 is further provided with a transverse recess 16 for receiving a retainer element 15. The retainer element is slidably received in the transverse recess 16, and is biased to move out of the recess by a resilient member 19. The retainer element 15 is provided with an opening 17 which corresponds to the cross-section of the annular recess 28. When the retainer 15 is pushed down into the transverse recess 16, the opening 17 falls together with the annular recess 28, as shown in Figure 2b. In the locking position of the retainer, to which it is urged by the resilient member 19, the opening 17 falls only partially together with the annular recess 28, so that a part of the retainer element 15 obscures the annular recess 28. In the situation as shown in Figure 2a, the retainer has taken its locking position. The stem 20 of the nozzle element 1 is fully inserted in the annular recess 28. The retainer 15 is engaging the groove 22 in the stem. Thus, the nozzle element 4 is secured to the shaft member 3.

A side surface of the retainer element 15 is provided with a protrusion which prevents the retainer element 15 from being depressed unintentionally. In order to press the retainer element down to release the nozzle element, the user will first have to push the protrusion 14 out of the way before the retainer element 15 can be pushed towards its releasing position. The retainer element 15 is hereto provided with a groove 18 which allows the part of the retainer element 15 provided with the protrusion 14 to collapse under pressure.

When the retainer element 15 is depressed (cf. Figure 2b), it will move into the transverse recess 16 and the opening 17 in the retainer member will fall together with the cross-section of the annular recess 28. Thus, the retainer element 15 no longer engages the groove 21 and the helical spring 10 urges the stem 20 out of the annular recess 28 and thus the nozzle element 1 is ejected from the shaft member 3 (as shown in Figure 2c). The ring member 12 thereby serves as a contact member between the helical spring 10 and the front of the stem 20. The ring 12 is urged by the spring 10 to the end of the second stem 30 until it abuts with the O-ring sealing 34. The annular ring serves in this position another function, namely it prevents the retainer element 15 from returning to its locking position. Hereto, the annular ring is provided with an annular flange which extends into the opening 17 in the retainer element.

In order to allow for easy re-insertion into the annular recess 28, both the front of the stem 20 and the front of the retainer element 15 are provided with inclined surfaces 25 and 18, respectively. The fact that the retainer element is kept in its open position by the ring 12 further facilitates the re-insertion of the nozzle element 1. Thus, both the operation of releasing the nozzle element 1 and re-inserting the nozzle element require only the use of one hand.

The stem 30 is further provided with a low-pressure nozzle 33 at its front end. This nozzle allows to use the handle together with the shaft member 3 as a completely functional tool without the need for a nozzle element 1. Thus, the user can very conveniently change between a low-pressure nozzle and a high-pressure nozzle by simply removing the nozzle element 1 with the high-pressure nozzle 4 from the shaft member 3 and vice versa.

When using the nozzle element 1, the low-pressure nozzle 33 and the high-pressure nozzle 4 are thus connected in series.

The coupling between the shaft member 3 and the nozzle element 1 allows the two members to rotate relative to one another, which is advantageous when using a flat spray nozzle. Thus, the angle of the flat spray can easily be adapted according to circumstances.

### REFERENCE NUMERALS

- 1: nozzle element
- 2: handle
- 3: shaft member
- 4: ejection nozzle
- 5: trigger
- 10: helical spring
- 12: ring
- 13: groove
- 14: protrusion
- 15: retainer element
- 16: transverse recess
- 17: opening
- 18: inclined surface
- 19: resilient member
- 20: stem
- 21: bore
- 22: groove
- 25: inclined surface
- 28: annular recess
- 30: stem
- 31: bore
- 32: groove
- 33: low-pressure nozzle
- 34: O-ring sealing

## Claims

1. Ejection nozzle and handle assembly for a domestic high-pressure cleaner comprising an ejection nozzle (4) for ejecting high pressure fluid integrated in a nozzle element (1), the nozzle element (1) being releasably connected to the handle (2) by a coupling system, the distance between the trigger (5) of the handle (2) and the ejection nozzle (4) being at least 750 mm due to the presence of the nozzle element (1) and a shaft member (3) between the handle (2) and the ejection nozzle (4), one complementary part of the coupling system forming an integral part of the nozzle element (1), the other complementary part of the coupling system forming an integral part of the shaft member (3), **characterised** in that the coupling system is an automatic locking quick-coupling system.

2. Assembly according to claim 1,**characterised** in that the length of the nozzle element (1) is less than 25%, preferably less than 10% of the total distance between the handle (2) and the ejection nozzle (4).

3. Assembly according to claim 1 or 2, **characterised** in that the shaft member (3) comprises an integrated low-pressure ejection nozzle (33) which allows the assembly to be used for low-pressure cleaning without using the releasable nozzle element (1).

4. Assembly according to any of claims 1 to 3, **characterised** in that the shaft member (3) is releasably connected to the handle (2) by an automatic locking quick-coupling system.

5. Assembly according to any of claims 1-4, **characterised** in that the coupling system allows the nozzle element to rotate relative to the shaft element (3).

6. Assembly according to any of claims 1-5, **characterised** in that the coupling system is of the a one-hand push-to-eject type.

7. Assembly according to any of claims 1 to 6, **characterised** in that the coupling system comprises at least one resilient sealing member, preferably an O-ring (34) which is secured to the part of the coupling system integral with the shaft element (3).

8. Assembly according to any of claims 1-7, **characterised** in that the coupling part integral with the nozzle element (1) comprises a stem (20) having an axial bore (21) therein and defining a preferably circumferential groove (22) on its outer surface.

9. Assembly according to any of claims 1-8, **characterised** in that the coupling part integral with the shaft member (3) comprises an annular recess (28) for receiving the stem (20), and a resiliently biased retainer element for engaging the groove (22).

10. Assembly according to claim 9, **characterised** in that the coupling part integral with the shaft member (3) further comprises a stem (30) having an axial bore (31) therein, disposed in the annular recess (28) for being inserted in the bore (21) of the stem (20).

11. Assembly according to claim 10, **characterised** in that the stem (30) comprises a low-pressure ejection nozzle (33).

12. Assembly according to claim 10 or 11, **characterised** in that the stem (30) defines a circumferential groove (32) on its outer surface in which an O-ring sealing (34) is received which engages and seals with the inner surface of the bore (21) of the stem (20).

13. Assembly according to any of claims 1-12, **characterised** in that a retainer element (15) is received in transverse recess (16) in the shaft element (3), the retainer (15) defining an opening (17) therein which clears the annular recess (28) completely when the retainer (15) is pushed against the biasing forces into the transverse recess (16), and the retainer (15) obscures the annular recess (28) partially when is takes its position towards which it is biased, for latching into the groove (22) of the stem (20).

14. Assembly according to any of claims 9-13, **characterised** in that the front of the stem (20) defines an inclined surface (25) and the front of the retainer element (15) defines another inclined surface (18) which abuts when the stem (20) is inserted in the annular recess (28), whereupon the retainer element (15) is pushed into the transverse opening (16), thus clearing the annular recess (28).

15. Assembly according to claims 10-14, **characterised** in that the coupling part integral with the shaft member (3) further comprises a helical spring (10) received in the annular recess (28) and disposed around the stem (30), for engaging the front of the stem (20) so as to be compressed upon insertion of the nozzle element (1) and to eject the nozzle element (1) when it is released.

16. Assembly according to claim 15, **characterised** by a ring (12) disposed over the stem (30) at the free end of the spring (10), said ring (12) forming an abutment surface for the front of the stem (20).

17. Assembly according to any of claims 13-16, **characterised** in that the retainer element (15) is provided with a security (14) against unintended disengagement.

18. Assembly according to claims 16 or 17, **characterised** in that the ring (12) extends into the opening (17) when the nozzle element (1) has been ejected in order to keep the retainer element (15) in the release position until the nozzle element (1) is inserted again.
